# EUROPÄISCHE PATENTANMELDUNG

(11) **EP 3 001 075 A1**
(43) Veröffentlichungstag der Anmeldung: **30.03.2016**
(21) Anmeldenummer: 15186897.3
(22) Anmeldetag: 25.09.2015
(51) Int. Cl.: F16J 7/00, F15B 15/14

(54) **LEICHTBAUKOLBENSTANGE**

(30) Priorität: 29.09.2014 DE 102014014436
(71) Anmelder: Liebherr-Components Kirchdorf GmbH, 88457 Kirchdorf (DE)
(72) Erfinder: Lavergne, Hans-Peter, 87779 Trunkelsberg (DE)
(74) Vertreter: Laufhütte, Dieter

(57) **Zusammenfassung**

Die folgende Erfindung betrifft eine Kolbenstange für eine Kolben-Zylinder-Vorrichtung, die eine längs verlaufende hohlzylinderförmige Aussparung umfasst. Die Erfindung richtet sich ferner auf eine Arbeitsmaschine mit wenigstens einer entspechenden Kolbenstange für eine Kolben-Zylinder-Vorrichtung.

## Beschreibung

Die vorliegende Erfindung betrifft eine Kolbenstange in Leichtbauweise für den Einsatz in einer Kolben-Zylinder-Vorrichtung im Miningbereich. Die Kolben- Zylinder-Vorrichtung ist im vorliegenden Beispiel ein Differentialhydraulikzylinder.

Derzeit sind aus dem Stand der Technik keine Leichtbauausführungen von Kolbenstangen für Kolben-Zylinder-Vorrichtungen im Bereich der Bergbautechnik bekannt. Zwar ist es bekannt, Zugankerversionen für die Rohrkonstruktion zu nutzen, jedoch ist die Nutzung von Zugankerkonstruktionen für beispielsweise die Kolbenstange nicht bekannt. Vielmehr werden gegebenenfalls Leichtbaukolbenstangen mit Rohren verschweißt oder verschraubt.

Problematisch ist es, eine Leichtbauweise im schweren Maschinenbau mit hohen dynamischen Belastungen bereitzustellen.

Aufgabe der vorliegenden Erfindung ist es daher, eine Kolbenstange bereitzustellen, die bei geringerem Gewicht eine hohe dynamische Festigkeit erreicht.

Diese Aufgabe wird erfindungsgemäß durch eine Kolben-Zylinder-Vorrichtung mit einer Kolbenstange gemäß Anspruch 1 gelöst, wobei die Kolbenstange eine längs der Kolbenstange verlaufende hohlzylinderförmige Aussparung umfasst.

Durch die hohlzylinderförmige Aussparung ist es möglich, zwei voneinander getrennte Bereiche der Kolbenstange zu definieren. Diese getrennten Bereiche können dabei unterschiedliche Material- und/oder Belastungseigenschaften aufweisen und somit beispielsweise insgesamt leichter ausgeführt sein. Die hohlzylinderförmige Aussparung ist dabei ein Trennungsbereich zwischen einem ersten und einem zweiten Bereich der Kolbenstange. Es ist dabei unerheblich, ob die hohlzylinderförmige Aussparung groß oder klein dimensioniert ist. Wesentlich ist lediglich, dass durch die Aussparung die zwei Bereiche des Kolbens getrennt sind.

Die zylinderförmige Aussparung kann auch eine mikroskopische stärke bzw. Zylinderwandstärke im Mikrometerbereich, beispielsweise zwischen 1 und 999 Mikrometer aufweisen, so dass sich die beiden Bereiche des Kolbens zumindest beschränkt aufgrund von Unebenheiten der beiden Bereiche des Kolbens berühren können.

In einem besonders bevorzugten Ausführungsbeispiel ist daher denkbar, dass die Kolbenstange ein Rohr und eine Zugstange umfasst, wobei die Aussparung zwischen Rohr und Zugstange angeordnet ist, und/oder wobei die Aussparung koaxial zu Zugstange und Rohr angeordnet ist, und/oder wobei die Aussparung gleich oder nahezu gleich lang wie das Rohr und/oder wie die Zugstange ist.

Durch den entsprechenden Aufbau der Kolbenstange aus deren Bauteilen wie Lagerauge, Rohr, Zugstange und Kolben ist es möglich, die einzelnen Bauteile getrennt voneinander und beispielsweise aus unterschiedlichen Materialien herzustellen. Auch erlaubt insbesondere der mehrstückige Aufbau der Kolbenstange die einzelnen Bauteile in vom Stand der Technik abweichender Weise miteinander zu verbinden. Die Länge der Aussparung kann in dem Sinne gleich oder nahezu gleich lang wie Rohr und/oder Zugstange sein, dass die Aussparung mehr als die Hälfte, insbesondere mehr als drei Viertel, der Länge der Kolbenstange umfasst. Es ist dabei auch denkbar, mehr als eine Zugstange zu verwenden, die nebeneinander, hintereinander oder ineinander angeordnet sein können. Somit ist es möglich, mehrere kleiner dimensionierte Zugstangen statt einer größeren zu verwenden

Gemäß einem weiteren bevorzugten Ausführungsbeispiel ist das wenigstens ein Bauteil der Kolben-Zylinder-Vorrichtung, das aus nicht schweißgeeignetem Werkstoff gefertigt ist.

Vorteilhafterweise können so auch Nichtmetalle zur Konstruktion der Kolben-Zylinder-Vorrichtung herangezogen werden. Dabei kann beispielsweise das Rohr oder die Zugstange aus einem Kunststoff bzw. aus einem Verbundwerkstoff gefertigt sein.

Gemäß einem weiteren bevorzugten Ausführungsbeispiel ist die Zugstange vorgespannt oder verspannt und/oder die Zugstange ist aus CFK gefertigt.

In einer Ausführung, bei der wenigstens einige der Bauteile der Kolben-Zylinder-Vorrichtung miteinander verschraubt sind, kann durch die gegebenenfalls auch hohe Vorspannung der Zugstange eine sehr sichere Schraubverbindung miteinander verschraubter Komponenten bereitgestellt werden, da durch die über die Verspannung oder Vorspannung erreichte Dehnlänge eine gute Schraubensicherung erzielt wird. Die Vorspannung sollte dabei in vorteilhafter Weise entweder 50% der Streckgrenze des Werkstoffs der Zugstange und/oder jedoch so hoch sein, dass die aus der Vorspannung resultierenden Zugkräfte in der Zugstange jederzeit höher als die aus der bodenseitigen Druckbeaufschlagung resultierenden Druckkräfte sind. Hierdurch kann gewährleistet werden, dass die Zugstange unabhängig von den wechselnden Belastungszuständen der Kolbenstange immer einer Zugspannung unterworfen ist und dadurch eine niedrige Schwingbreite der Spannungen in der Zugstange erzielt werden können.

Die Nutzung von CFK bzw. kohlenstofffaserverstärktem Kunststoff oder ähnlichen Materialien bzw. Verbundwerkstoffen ermöglicht dabei eine besonders gewichtsreduzierte Ausführung der Kolbenstange.

In einem weiteren bevorzugten Ausführungsbeispiel wird die Zugstange innerhalb des Rohres angeordnet. Die Zugstange und das Rohr sind unter Zugspannung bzw. unter Druckspannung miteinander verbunden oder umgekehrt.

Somit ist es vorteilhaft möglich, die Zugkräfte und die Druckkräfte, die über die Kolbenstange bzw. die Kolben-Zylinder-Vorrichtung übertragen werden, auf jeweils separate Bauteile aufzuteilen und so für die Spannungsamplitude eine niedrigere Schwingbreite zu ermöglichen.
Durch die Ineinanderlagerung der Bauteile Zugstange und Rohr werden diese zum einen platzsparend angeordnet, zum anderen ist das innengelagerte Bauteil, nämlich die Zugstange, durch das außengelagerte Bauteil gegen äußere Einflüsse bzw. gegen Beschädigungen geschützt. Dadurch kann die Zugstange auch aus einem schlagempfindlichen Werkstoff, beispielsweise CFK oder hochvergütetem Stahl hergestellt werden.

In einem weiteren bevorzugten Ausführungsbeispiel ist denkbar, dass die Zugstange über ein Gewinde mit einem Lagerauge und mittels einer Gewindemutter mit dem Kolben verbunden ist. In einer alternativen Ausführungsform ist dagegen denkbar, dass die Zugstange über ein Gewinde oder über Formschluss mit einem Lagerauge und über ein Gewinde mit einem Kolben verbunden ist.

In einer weiteren alternativen Ausführungsform ist ferner denkbar, dass die Zugstange über ein Gewinde mit einem Lagerauge und über Formschluss mit dem Kolben verbunden ist.

Durch die alternativen Verbindungsmöglichkeiten von Zugstange, Lagerauge und Kolben besteht die Möglichkeit, je nach Bedarf die einzelnen Bauteile lösbar und vorgespannt miteinander zu verbinden. Dabei ergibt sich insbesondere der Vorteil, dass bei Beschädigungen der Einzelteile diese einfach ausgetauscht werden können und somit verbesserte Reparaturmöglichkeiten bestehen. Auch ist eine vorteilhaft kostengünstige Nachrüstung von verbesserten oder modifizierten Bauteilen möglich, da die Einzelteile leicht austauschbar sind.

In dem Zusammenhang ergibt sich ferner der Vorteil, dass nahezu beliebige und/oder unterschiedliche Werkstoffe eingesetzt werden können, welche nicht schweißgeeignet sein müssen, was die Verfügbarkeit von lieferbaren Werkstoffen erleichtert und den Einsatz von vorteilhaften Werkstoffen, wie besondere Legierung, Aluminium oder ähnlichem ermöglicht. Auch ist bei einem Ausführungsbeispiel mit einem Rohr eine einfache Aufarbeitung wie beispielsweise Schleifen oder Verchromen der Kolbenstangenbeschichtung bzw. des Rohres aufgrund der einfachen Rohrstruktur umstandslos möglich. Zur Bearbeitung kann das Rohr von den weiteren Kolbenstrukturen getrennt werden, wodurch eine Bearbeitung vereinfacht bzw. überhaupt ermöglicht wird. Insgesamt ergibt sich eine Konstruktion als eine Art Baukastensystem, wobei eine vorteilhaft erhöhte Kombinationsvielfalt besteht. Das Ersatzteillager kann aufgrund der erhöhten Gleichteileverwendung zudem reduziert werden.

Auch wenn die Kolben-Zylinder-Vorrichtung im Ausführungsbeispiel in einem Differentialzylinder beschrieben wird, kann es in einem Gleichlaufzylindersystem umgesetzt werden.

Alternativ ist eine Ausführung als Pneumatiksystem denkbar, womit der Einsatz einer Kolben-Zylinder-Vorrichtung mit den zuvor genannten Merkmalen in allen üblichen hydraulischen oder pneumatischen Systemen möglich ist.

Die vorliegende Erfindung richtet sich ferner auf eine Arbeitsmaschine, insbesondere einen Miningbagger mit wenigstens einer einem Hydraulikzylinder/Kolben-Zylinder-Vorrichtung nach einem der Ansprüche 1 bis 9.

Weitere Einzelheiten und Vorteile werden nun anhand der Figuren erläutert. Dabei zeigen:
- Figur 1:: eine Kolben-Zylinder-Vorrichtung gemäß dem Stand der Technik; und
- Figur 2:: eine erfindungsgemäße Kolben-Zylinder-Vorrichtung.

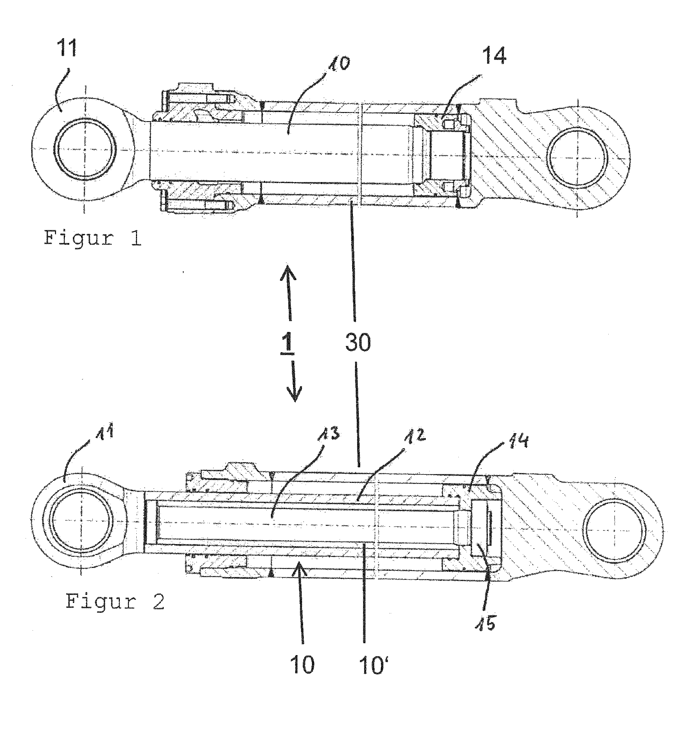

Figur 1 zeigt eine Kolben-Zylinder-Vorrichtung 1 gemäß dem Stand der Technik, mit einer Kolbenstange 10, die in einem Zylinder 30 verschieblich gelagert ist und die an einem Ende ein Lagerauge 11 und an einem dem Lagerauge 11 entgegengesetzten Ende einen Kolben 14 umfasst. Bei der in Figur 1 gezeigten Kolben-Zylinder-Vorrichtung 1 kann es sich um einen Differenzialhydraulikzylinder handeln, welcher im schweren dynamischen Einsatz für Miningbagger eingesetzt wird. Dabei ist die Kolbenstange 10 üblicherweise aus einem Freiformschmiedeteil hergestellt. Beim rechnerischen Nachweis bzw. bei der rechnerischen Analyse der Vorrichtung werden die limitierten dynamischen Lasten deutlich, da die gemäß dem Stand der Technik verwendeten Schweißnähte sehr geringe zulässige Spannungsamplituden haben und zudem mit voller Zug- und Druckkraft belastet werden. Gleiches gilt für geschraubte Lösungen sofern diese nicht vorgespannt werden können, da durch Kerbeffekte im Gewinde sehr hohe Spannungsamplituden auftreten können.

Figur 2 zeigt eine erfindungsgemäße Kolben-Zylinder-Vorrichtung 1, bei der die Kolbenstange 10, die Bauteile Lagerauge 11, Rohr 12, Zugstange 13 und Kolben 14 umfasst. Zwischen Rohr 12 und Zugstange 13 ergibt sich dabei eine hohlzylinderförmige Aussparung 10'. Rohr 12 und Zugstange 13 verlaufen somit größtenteils von der hohlzylinderförmigen Aussparung 10' voneinander getrennt. Der Kolben 14 ist dabei über ein eine Schraubverbindung unter hoher Vorspannung zur Reduzierung der entstehenden dynamischen Spannungsamplituden bei Belastung mit der Zugstange 13 und/oder mit dem Rohr 12 verbunden und bildet so eine Einheit mit der Kolbenstange 10 . Die wesentlichen Bauteile der Kolbenstange 10 sind das Rohr 12 und die Zugstange 13. Lagerauge 11, Kolben 14 und Gewindemutter 15 können mit Kolbenstange 10 und Roh 12 eine Einheit bilden.

In der erfindungsgemäßen Vorrichtung kann die Kolbenstange 10 so aufgebaut sein, dass ein Lagerauge 11 über eine Zugstange 13 mit dem Kolben 14 verspannt ist. In einem Ausführungsbeispiel kann dabei die Zugstange 13 über ein Gewinde mit dem Lagerauge 11 und mittels einer Gewindemutter 15 mit dem Kolben 14 verbunden sein. In einem weiteren Ausführungsbeispiel kann die Zugstange 13 über ein Gewinde oder über Formschluss am Lagerauge 11 und über ein Gewinde am Kolben 14 befestigt sein. In einem dritten Ausführungsbeispiel kann die Zugstange 13 über ein Gewinde am Lagerauge 11 und über Formschluss am Kolben 14 befestigt sein.

Es ergeben sich dadurch insgesamt Einsparungen des Gesamtgewichts der Kolben-Zylinder-Vorrichtung 1, die durch Verwendung beispielsweise eines CFK-Zugstabes bzw. einer CFK-Zugstange 13 vergrößert werden können. Ferner ermöglicht die erfindungsgemäße Vorrichtung eine bessere Ausnutzung des Rohres 12 bei Knickbelastung bei gleichzeitig vorteilhafter Gewichtseinsparung.

Im in Figur 2 gezeigten Ausführungsbeispiel ist die Aussparung 10' so bemessen, dass ein deutlicher Abstand zwischen Zugstange 13 und Rohr 12 besteht. Dies ist nicht unbedingt notwendig. Der Abstand zwischen den beiden genannten Bauteilen kann auch klein bzw. nahe null sein. Entscheidend ist lediglich, dass die beiden Bauteile Zugstange 13 und Rohr 12 nicht einteilig ausgeführt sind.

Ferner ist zu erkennen, dass der Kolben 14 eine axial mittig angeordnete Durchführung umfassen kann, durch welche die Zugstange 13 führbar ist. Die Durchführung kann dabei ein Gewinde aufweisen. Innerhalb der Durchführung kann wenigstens eine Dichtungsnut vorgesehen sein, in der eine oder mehrere Dichtungen bereitgestellt sein können. Falls mehr als eine Zugstange 13 verwendet wird, können entsprechend mehr oder andere Durchführungen zum Durchführen der Zugstangen vorgesehen sein. Die Durchführung bzw. die Durchführungen müssen dabei nicht axial mittig angeordnet sein. Sie können vielmehr in jeder passenden Anordnung vorliegen.

Der Kolben 14 kann weiterhin auf seinen axial gegenüberliegenden Seiten im Wesentlichen zylinderförmige Ausnehmungen umfassen. Diese können im Wesentlichen koaxial zum Kolben und/oder radial innen verlaufen, so dass radial außen von diesen Ausnehmungen die äußeren Kolbenwände verlaufen bzw. die äußere Kolbenwand verläuft. Es kann auch nur eine einzelne derartige Ausnehmung auf einer der beiden axial gegenüberliegenden Seiten vorgesehen sein. In einer der Ausnehmungen kann dabei das Rohr 12 gelagert sein, während alternativ oder zusätzlich in der anderen Ausnehmung eine oder mehrere Gewindemuttern 15 vorgesehen sein können. Innerhalb der Ausnehmung oder der Ausnehmungen kann wenigstens eine Dichtungsnut vorgesehen sein, in der eine oder mehrere Dichtungen bereitgestellt sein können.

Der Kolben 14 kann an einer von der Zugstange 13 am weitesten entfernten Kante eine im Wesentlichen hohlzylinderförmige Aussparung umfassen. Diese kann im Wesentlichen koaxial zum Kolben 14 und/oder radial außen am Kolben 14 verlaufen, so dass radial innen von dieser Aussparung wenigstes ein Teil der äußeren Kolbenwände bzw. der äußeren Kolbenwand verläuft. Im Bereich dieser Aussparung kann wenigstens eine Fluidzu- und/oder Fluidableitung vorgesehen sein. Wenn sowohl eine derartige Aussparung als auch eine zuvor geschilderte Ausnehmung vorgesehen sind, so kann am Kolben 14 ein Fluidraum bereitgestellt sein, welcher einen im Wesentlichen zylinderförmigen Abschnitt und einen im Wesentlichen hohlzylinderförmigen Abschnitt umfasst. Zwischen diesen beiden Abschnitten kann wenigstens eine Verbindung vorgesehen sein. Diese Verbindung kann so angeordnet sein, dass die beiden Abschnitte auch dann miteinander kommunizieren, wenn der Kolben 14 in einer Endposition ist, in der der Kolben 14 in axialer Richtung den Zylinder 30 berührt.

Die Zugstange 13 kann in dem Bereich, in dem sie mit dem Kolben 14 koppelbar ist, einen ersten Koppelbereich mit von der Zugstange 13 unterschiedlichen

Durchmessern umfassen oder die Zugstange 13 kann mit einem derartigen Koppelbereich verbunden sein. Der Durchmesser des kolbenseitigen ersten Koppelbereichs kann dabei größer als der Durchmesser der Zugstange 13 sein. Dieser erste Koppelbereich kann aus einem anderen Material gefertigt sein, als ein mittlerer Bereich der Zugstange 13 bzw. als die Zugstange 13 selbst. Die Zugstange 13 kann somit auch mehrstückig gefertigt sein, bzw. sie kann selbst mit weiteren Bauteilen gekoppelt sein. Während der mittlere Bereich zum Beispiel aus CFK gefertigt sein kann, kann der erste Koppelbereich aus einem Metall oder einem anderen Material gefertigt sein. Der erste Koppelbereich kann dabei ein oder mehrere unterschiedliche Gewindeabschnitte umfassen, mittels derer der Koppelbereich mit dem Kolben 14 und/oder der Gewindemutter 15 oder den Gewindemuttern 15 verschraubbar ist.

An der dem Kolben 14 gegenüberliegenden Seite kann an der Zugstange 13 ein zweiter Koppelbereich vorgesehen sein, der ebenfalls aus einem anderen Material als die Zugstange 13, wie zum Beispiel aus einem Metall, bestehen kann und der ebenfalls einen von der Zugstange 13 unterschiedlichen Durchmesser aufweisen kann. Der zweite Koppelbereich kann aber auch einstückig mit der Zugstange 13 ausgeführt sein. Der Durchmesser des zweiten Koppelbereichs kann dabei größer oder kleiner als der Durchmesser der Zugstange 13 sein. Beide Koppelbereiche können auch Abschnitte mit unterschiedlichen Durchmessern aufweisen, die größer und/oder kleiner als der Durchmesser der Zugstangen 13 sein können.

Der zweite Koppelbereich kann Teil des Lagerauges 11 sein oder er kann wiederum mit diesem gekoppelt sein. An dem zweiten Koppelbereich können ein oder mehrere Gewinde vorgesehen sein, mittels derer der zweite Koppelbereich mit Lagerauge 11, Zugstange 13 und/oder Rohr 12 durch Verschrauben verbindbar ist. Es können ferner Dichtungsnuten an dem zweiten Koppelbereich vorgesehen sein, in denen Dichtungsringe bereitstellbar sind. Die Zugstange 13 selbst kann als Hohlzylinder oder als massives Bauteil ausgeführt sein.

## Patentansprüche

1. Kolbenstange (10) für eine Kolben-Zylinder-Vorrichtung (1),
**dadurch gekennzeichnet,**
**dass** die Kolbenstange (10) eine längs verlaufende hohlzylinderförmige Aussparung (10') umfasst.

2. Kolbenstange (10) nach Anspruch 1, **dadurch gekennzeichnet, dass** sie ein Rohr (12) und eine Zugstange (13) umfasst, wobei die Aussparung (10') zwischen Rohr (12) und Zugstange (13) angeordnet ist, und/oder dass die Aussparung (10') koaxial zu Zugstange (13) und Rohr (12) angeordnet ist, und/oder dass die Aussparung (10') gleich oder nahezu gleich lang wie das Rohr (12) und/oder wie die Zugstange (13) ist.

3. Kolbenstange (10) nach Anspruch 2, **dadurch gekennzeichnet, dass** wenigstens ein Bauteil der Kolbenstange (10) aus nicht schweißgeeignetem Werkstoff gefertigt ist.

4. Kolbenstange (10) nach Anspruch 2 oder 3, **dadurch gekennzeichnet, dass** die Zugstange (13) vorgespannt ist, und/oder dass die Zugstange (13) aus einem dauerfesten Leichtbauwerkstoff, wie CFK, hochfester Stahl, Titan, gefertigt ist.

5. Kolbenstange (10) nach einem der Ansprüche 2 bis 4, **dadurch gekennzeichnet, dass** die Vorspannung mindestens 50% der Streckgrenze des Werkstoffes der Zugstange und/ oder so hoch ist, dass die aus der Vorspannung resultierenden Zugkräfte jederzeit höher sind als die aus der bodenseitigen Druckbeaufschlagung der Kolbenstange resultierenden Druckkräfte.

6. Kolbenstange (10) nach einem der Ansprüche 2 bis 5, **dadurch gekennzeichnet, dass** die Zugstange (13) über ein Gewinde mit einem Lagerauge (11) und mittels einer Gewindemutter (15) mit einem Kolben (14) verbunden ist.

7. Kolbenstange (10) nach einem der Ansprüche 2 bis 5, **dadurch gekennzeichnet, dass** die Zugstange (13) über ein Gewinde oder über Formschluss mit einem Lagerauge (11) und über ein Gewinde mit einem Kolben (14) verbunden ist.

8. Kolbenstange (10) nach einem der Ansprüche 2 bis 5, **dadurch gekennzeichnet, dass** die Zugstange (13) über ein Gewinde mit einem Lagerauge (11) und über Formschluss mit dem Kolben (14) verbunden ist.

9. Kolbenstange (10) nach einem der vorhergehenden Ansprüche, **dadurch gekennzeichnet, dass** die Kolben-Zylinder-Vorrichtung (1), in der sie eingesetzt ist, eine Differentialhydraulik-Kolben-Zylinder-Vorrichtung (1) oder ein Gleichlaufzylinder ist.

10. Arbeitsmaschine, insbesondere Miningbagger mit wenigstens einer Kolbenstange (10) nach einem der Ansprüche 1 bis 9.
